# EUROPÄISCHE PATENTSCHRIFT

(11) **EP 1 958 589 B1**
(45) Veröffentlichungstag und Bekanntmachung des Hinweises auf die Patenterteilung: **30.09.2015**
(21) Anmeldenummer: 08002725.3
(22) Anmeldetag: 14.02.2008
(51) Int. Cl.: A61C 3/02

(54) **Dentalfraeser**
Dental milling cutter
Fraise dentaire

(30) Priorität: 15.02.2007 DE 102007009304
(43) Veröffentlichungstag der Anmeldung: 20.08.2008
(73) Patentinhaber: acurata GmbH & Co. KG, 94169 Thurmansbang (DE)
(72) Erfinder: Mahnhardt, Karl, 94579 Zenting (DE); Heininger, Mathias, 94169 Thurmansbang (DE)
(74) Vertreter: Patentanwälte Ruff, Wilhelm, Beier, Dauster & Partner

(56) Entgegenhaltungen:
- DE-A1- 19 734 016
- DE-U1- 20 105 015
- GB-A- 2 405 365

## Beschreibung

Die Erfindung betrifft einen Dentalfräser mit einem Fräskopf und einem Schaft, wobei der Fräskopf mit einer Verzahnung versehen ist, die sich über eine gesamte Länge einer Kontur des Fräskopfes erstreckt, wobei in Richtung der Mittellängsache des Dentalfräsers gesehen der Umfang des Fräskopfes in mehrere Abschnitte unterteilt ist und wobei sich in Umfangsrichtung des Fräskopfes Abschnitte mit unterschiedlichen Grundverzahnungen abwechseln.

Aus der britischen Offenlegungsschrift GB 2 405 365 A ist ein Fräser bekannt, bei dem über dem Umfang gesehen mehrere Sätze an Zähnen angeordnet sind. Jeder Satz der Zähne besteht aus einem voreilenden groben Zahn und einem nacheilenden feinen Zahn. Typischerweise beträgt die Anzahl der Zähne in einem Satz 3, wobei auch mehr als drei Zähne vorgesehen sein können und die Anzahl an feinen und groben Zähnen in jedem Satz variiert werden kann.

Aus der deutschen Offenlegungsschrift DE 197 34 016 A1 ist ein Dentalfräser mit asymmetrisch gestalteten Schneiden bekannt, um im Rechtslauf und im Linkslauf unterschiedliche Bearbeitungseigenschaften zu erzielen. Vorteilhafterweise sind alle Schneiden des Kopfes gleich ausgebildet, wobei es alternativ auch möglich ist, einzelne Schneiden oder Schneidbereiche mit einem abweichenden Spanwinkel oder einer abweichenden Geometrie zu versehen, um die unterschiedlichen Bearbeitungsvorgänge zu unterstützen.

Aus der europäischen Offenlegungsschrift EP 1 021 995 A2 ist ein Dentalfräser bekannt, der mit einer sich über eine gesamte Länge einer Kontur des Fräskopfes erstreckenden Grundverzahnung versehen ist. Auf diese Grundverzahnung werden zwei weitere Verzahnungen aufgebracht, wobei eine zweite Verzahnung die annähernd parallel zur Mittellängsachse verlaufende Grundverzahnung in gleichmäßig große Schneidenabschnitte unterteilt und die dritte Verzahnung in Form von Spanbrechernuten in die Grundverzahnung eingebracht wird. Letztendlich entstehen dadurch unterschiedlich lange Schneiden der Grundverzahnung, die durch unterschiedlich tiefe Nuten getrennt sind.

Aus der deutschen Offenlegungsschrift DE 198 10 284 A1 ist ein Dentalfräser bekannt, dessen Fräskopf mit einem kegelstumpfförmigen Hauptteil und einer kegelförmigen Spitze versehen ist, wobei die Spitze gegenüber dem kegelstumpfförmigen Körper mit einer unterschiedlichen Verzahnung versehen ist. Beispielsweise kann der kegelstumpfförmige Grundkörper des Fräskopfes eine Diamantverzahnung und die Spitze des Fräskopfes eine gerade oder schraubenförmige Verzahnung aufweisen.

Aus der deutschen Patentschrift DE 288 313 ist ein Zahnbohrer bekannt, bei dem die Schneiden am Kopf des Bohrers nicht am Mittelpunkt zusammenlaufen, sondern die Schneiden jeder Bohrerhälfte jeweils an einem außermittig liegenden Punkt zusammenlaufen. Der rechte und der linke Punkt, an denen die jeweiligen Schneiden zusammenlaufen, sind dann mit einer Schneide verbunden.

Aus der deutschen Gebrauchsmusterschrift DE 20 30 26 18 U1 ist ein Dentalbohrer bekannt, bei dem die Schneiden bis in den Bereich des Bohrerkopfes mit Spanbrechereinschnitten versehen sind.

Aus der deutschen Patentschrift DE 19 718 938 C1 ist ein Dentalfräser bekannt, der unterschiedliche geformte Schneiden aufweist. Benachbarte Schneiden weisen jeweils unterschiedliche Spanwinkel, Keilwinkel und, davon abhängig, Freiwinkel auf. Es kann weiter vorgesehen sein, drei unterschiedliche Schneidentypen zu verwenden, wobei stets benachbarte Schneiden unterschiedlich ausgeformt sind.

Mit der Erfindung soll ein Dentalfräser geschaffen werden, der ein leichtes und schnelles Eindringen in einen zu bearbeitenden Werkstoff bei gleichzeitig feiner bearbeiteter Oberfläche ermöglicht.

Erfindungsgemäß ist hierzu ein Dentalfräser mit einem Fräskopf und einem Schaft vorgesehen, wobei der Fräskopf mit einer Verzahnung versehen ist, die sich über eine gesamte Länge einer Kontur des Fräskopfes erstreckt, bei dem in Richtung einer Mittellängsachse des Dentalfräsers gesehen der Umfang des Fräskopfes in mehrere Abschnitte unterteilt ist, wobei sich in Umfangsrichtung des Fräskopfes Abschnitte mit unterschiedlichen Grundverzahnungen abwechseln und bei dem jeder Abschnitt mehr als einen Zahn der gleichen Grundverzahnung enthält.

Der erfindungsgemäße Dentalfräser weist somit über den Umfang des Fräskopfes gesehen unterschiedliche Grundverzahnungen auf und in Umfangsrichtung des Fräskopfes wechseln sich Abschnitte mit unterschiedlichen Grundverzahnungen ab. Es sind also mindestens zwei Abschnitte vorgesehen, wobei jeder der Abschnitte eine andere Grundverzahnung trägt. Bei zwei Grundverzahnungen in zwei Abschnitten des Fräskopfes kann somit eine der Grundverzahnungen speziell auf ein leichtes und schnelles Eindringen in den zu bearbeitenden Werkstoff und die andere Grundverzahnung hinsichtlich der Erzielung einer feinen bearbeiteten Oberfläche ausgelegt werden. Da unterschiedliche Grundverzahnungen verwendet werden, können die angestrebten Eigenschaften des Dentalfräsers erzielt werden. Die Kontur des Fräskopfes kann aus Radien, Geraden oder Kombinationen von Radien und Geraden bestehen. Der Umfang des Kopfes ergibt sich dann durch Rotation der Kontur um die Mittellängsachse.

In Weiterbildung der Erfindung enthalten Abschnitte mit unterschiedlicher Grundverzahnung eine unterschiedliche Anzahl von Zähnen.

Wenn Abschnitte mit unterschiedlicher Grundverzahnung eine unterschiedliche Anzahl von Zähnen enthalten, wirkt sich dies positiv auf das Betriebsverhalten, beispielsweise die im Betrieb auftretenden Vibrationen, aus.

In Weiterbildung der Erfindung erstrecken sich die Abschnitte jeweils über die gesamte Länge des Fräskopfes und sind wenigstens teilweise mit unterschiedlichen, sich jeweils über die gesamte Länge der Kontur des Fräskopfes erstreckenden Grundverzahnungen versehen.

Die Abschnitte mit unterschiedlichen Grundverzahnungen überdecken somit die gesamte Länge der Kontur des Fräskopfes und auch die unterschiedlichen Grundverzahnungen werden innerhalb der jeweiligen Abschnitte über die gesamte Länge der Kontur des Fräskopfes durchgeführt. Der erfindungsgemäße Dentalfräser weist die gewünschten Eigenschaften dadurch über die gesamte Oberfläche des Fräskopfes auf, so dass über den gesamten Fräskopf dieselben Oberflächenbearbeitungseigenschaften erzielt werden können.

In Weiterbildung der Erfindung unterscheiden sich die Grundverzahnungen im Teiler, entsprechend einer Anzahl von Zahnflanken pro Umfangslänge, in einer Zahntiefe, in der Zahnform, in einem Brustwinkel der Zähne, in einem Rückenwinkel der Zähne und/oder hinsichtlich eines Hinterschliffs der Zähne.

Durch geeignete Variation der Grundverzahnungen hinsichtlich der genannten Parameter lassen sich die für den jeweiligen Anwendungszweck gewünschten Eigenschaften des Dentalfräsers erzielen.

In Weiterbildung der Erfindung verlaufen die wenigstens zwei unterschiedlichen Grundverzahnungen innerhalb von Ebenen, die eine Mittelängsachse des Dentalfräsers einschließen.

Die wenigstens zwei unterschiedlichen Grundverzahnungen haben dann keinen Drall und verlaufen bei radialer Blickrichtung demgemäß parallel zur Mittellängsachse. Es ergeben sich dadurch gerade, lamellenförmige Schneiden, entsprechend einer Steigung von 0 Grad.

In Weiterbildung der Erfindung sind die wenigstens zwei unterschiedlichen Grundverzahnungen in Bezug auf eine Mittellängsachse des Dentalfräsers mit einem Drall versehen.

Demgemäß laufen beide Grundverzahnungen somit um den Fräskopf um.

In Weiterbildung der Erfindung weisen die Abschnitte wenigstens teilweise die gleiche Fläche auf.

Dadurch wird eine gleichmäßige Unterteilung des Fräskopfes erreicht, wodurch gleichmäßige Laufeigenschaften bei der Bearbeitung erzielt werden. In Richtung der Mittellängsachse gesehen können die Abschnitte dann beispielsweise die Form von Kreissektoren aufweisen, es ist aber ebenfalls möglich, die Abschnitte nach Art von Schraubenbändern zu konfigurieren. Beispielsweise kann eine regelmäßige Aufteilung des Fräskopfumfanges in drei, vier, fünf oder sechs Abschnitte erfolgen, wobei die Anzahl der Abschnitte auch abhängig von der gewünschten Arbeitsdrehzahl gewählt wird. Beispielsweise können auch Abschnitte mit den Größen 1/4, 1/8, 1/8, 1/4, 1/8, 1/8 aufeinanderfolgen. Allgemein sind gleichartige oder wechselnde Größen der Abschnitte möglich.

In Weiterbildung der Erfindung sind vier Abschnitte vorgesehen, die in Umfangsrichtung gesehen abwechselnd mit unterschiedlichen Grundverzahnungen versehen sind.

Auf diese Weise kann ein Dentalfräser mit sehr guten Eigenschaften bei noch einfacher Herstellbarkeit realisiert werden. Beispielsweise können auch drei oder mehr unterschiedlichen Grundverzahnungen gewählt werden.

In Weiterbildung der Erfindung stoßen die unterschiedlichen Grundverzahnungen im Bereich des dem Schaft gegenüberliegenden Endes an Trennlinien der Abschnitte aufeinander.

Auf diese Weise kann eine sogenannte Gruppenverzahnung mit den erfindungsgemäßen Eigenschaften ausgebildet werden. Die Abschnitte mit unterschiedlichen Grundverzahnungen, beispielsweise ein Abschnitt mit fünf schmalen Zähnen und ein gleichgroßer Abschnitt mit vier breiten Zähnen, stoßen dann im Bereich des beispielsweise abgerundeten Endes des Fräskopfes etwa im rechten Winkel aufeinander.

In Weiterbildung der Erfindung ist der Fräskopf an seinem dem Schaft gegenüberliegenden Ende abgerundet oder abgeschrägt ausgebildet, wobei die unterschiedlichen Grundverzahnungen in einem, auf der Mittellängsachse des Dentalfräsers liegenden Scheitelpunkt zusammenlaufen.

Auf diese Weise können die unterschiedlichen Grundverzahnungen bis zum Scheitelpunkt durchgeführt werden und die gewünschten Bearbeitungseigenschaften des Fräsers ergeben sich auch bei einer Bearbeitung ausschließlich mit dem abgerundeten oder abgeschrägten Ende des Fräskopfes.

In Weiterbildung der Erfindung ist die Verzahnung des Fräskopfes mit Spanbrechernuten versehen.

Die unterschiedlichen und entlang dem Umfang des Fräskopfes aufeinanderfolgenden Grundverzahnungen können jeweils mit Spanbrechernuten versehen sein, wobei die Spanbrechernuten über den Umfang des Fräskopfes annähernd gleich ausgebildet sind und sich lediglich Abweichungen dadurch ergeben können, dass die Spanbrechernuten mit ein und demselben Werkzeug geschnitten werden, sich abhängig von der gerade bearbeiteten Zahnform der jeweiligen Grundverzahnung aber eine unterschiedliche Form ergeben kann. Beispielsweise können auch zwei Spanbrechernuten parallel zueinander schraubenlinienförmig um den Fräskopf herumgeführt werden, wobei die Steigung der Schraubenlinie und der Abstand der beiden Spanbrechernuten zueinander so gewählt wird, dass lange und kurze Schneidenabschnitte der Grundverzahnungen in Längsrichtung des Fräskopfes gesehen einander abwechseln. Beispielsweise sind beim Einbringen der Spanbrechernuten auch Kreuzverzahnungen, ein Querhieb, ein doppelter Querhieb, ein gegenläufiger Querhieb und bei zwei Spanbrechernuten der gleiche Drall, ein unterschiedlicher Drall oder auch ein gegenläufiger Drall möglich.

Weitere Merkmale und Vorteile der Erfindung ergeben sich aus der nachfolgenden Beschreibung im Zusammenhang mit den Zeichnungen. Einzelmerkmale der unterschiedlichen, in den Zeichnungen dargestellten Ausführungsformen können dabei in beliebiger Weise miteinander kombiniert werden. In den Zeichnungen zeigen:
- Fig. 1a: eine Seitenansicht eines Dentalfräsers gemäß einer ersten Ausführungsform der Erfindung,
- Fig. 1b: eine Draufsicht auf den Fräskopf des Dentalfräsers der Fig. 1a,
- Fig. 1c: eine vergrößerte, schematische Darstellung der Ansicht der Fig. 1b,
- Fig. 1d: eine zeichnerische Darstellung des Dentalfräsers der Fig. 1 a,
- Fig. 2a: eine Seitenansicht eines Dentalfräsers gemäß einer zweiten Ausführungsform der Erfindung,
- Fig. 2b: eine Draufsicht auf den Fräskopf des Dentalfräsers der Fig. 2a,
- Fig. 3a: eine Seitenansicht eines Dentalfräsers gemäß einer dritten Ausführungsform der Erfindung und
- Fig. 3b: eine Draufsicht auf den Dentalfräser der Fig. 3a.

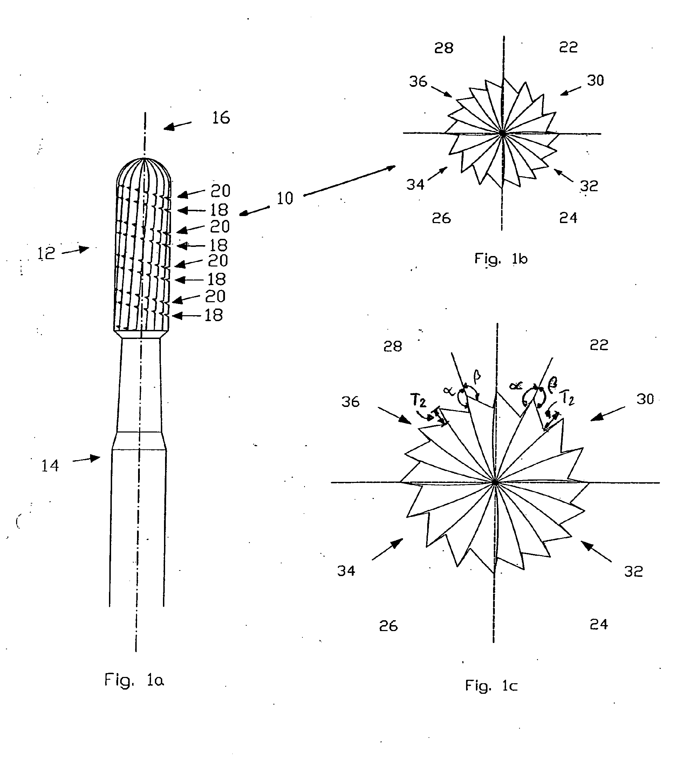

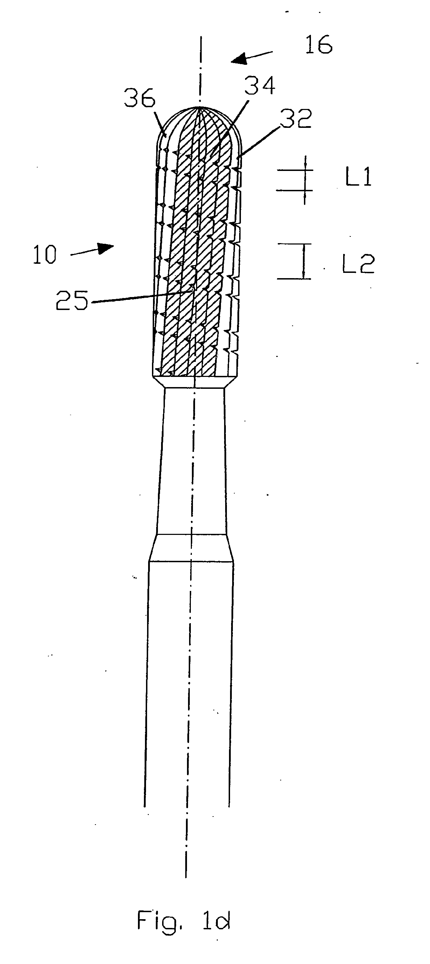

Die Darstellung der Fig. 1 a zeigt einen erfindungsgemäßen Dentalfräser 10 in einer Seitenansicht, der einen Fräskopf 12 mit einer Verzahnung und einen Schaft 14 aufweist, mit dem der Dentalfräser 10 in einen Antrieb eingesetzt werden kann. Wie der Fig. 1 a zu entnehmen ist, ist der Fräskopf 12 an seinem, dem Schaft 14 gegenüberliegenden Ende abgerundet ausgebildet und die Verzahnung erstreckt sich auch in diesen abgerundeten Bereich hinein. Fig. 1a ist weiter zu entnehmen, dass die Verzahnung am Fräskopf 12 leicht schräg zu einer Mittellängsachse 16 des Dentalfräsers 10 verläuft. Die Verzahnung am Fräskopf 12 ist weiterhin mit Spanbrechernuten 18 und 20 versehen, wobei die Spanbrechernuten 18, 20 auf zwei, sich schraubenförmig um den Umfang des Fräskopfes 12 herumwindenden Bahnen angeordnet sind. Die Steigung dieser parallel zueinander verlaufenden schraubenförmigen Bahnen ist im Verhältnis zum Abstand der nebeneinander angeordneten Bahnen dabei so gewählt, dass ein Abstand zwischen den beiden schraubenförmigen Bahnen, die die Spanbrechernuten 18, 20 erzeugen, etwa halb so groß ist wie die Steigung der Bahnen, also den Abstand, den zwei Windungen ein und derselben Bahn zueinander aufweisen. Dadurch ergibt sich das in Fig. 1a erkennbare Spanbrecherbild, dass nämlich die Zahnflanken der Verzahnung abwechselnd lange und kurze Schneiden aufweisen, speziell kurze Schneiden zwischen den beiden benachbarten schraubenförmigen Bahnen, die sich in derselben Windung oder demselben Teilkreis, z.B. 0° bis 360° befinden, und lange Schneidenabschnitte zwischen benachbarten Bahnen, die sich in unterschiedlichen Windungen oder Teilkreisen befinden, also z.B. zwischen der Spanbrechernut 20 bei 360° und der Spanbrechernut 18 bei 720°.

Ein wesentliches Merkmal der Erfindung ist erst im Zusammenhang mit den Fig. 1b und 1c zu erkennen. Sowohl in der Darstellung der Fig. 1b als auch der schematischen Darstellung der Fig. 1c ist der Fräser 10 in der Draufsicht in vier Sektoren unterteilt, die jeweils einen Winkel von 90° abdecken. Diese Sektoren sind im Uhrzeigersinn mit 22, 24, 26 und 28 bezeichnet. Anhand der Fig. 1b und 1c ist nun zu erkennen, dass in den Sektoren 22 und 26 jeweils lediglich vier Zähne, in den Sektoren 24 und 28 dahingegen jeweils fünf Zähne angeordnet sind. Überträgt man die in Fig. 1b und Fig. 1c dargestellten Sektoren 22, 24, 26, 28 auf eine Abwicklung des Gesamtumfangs des Fräskopfes 12, so ist der Umfang des Fräskopfes 12 in vier Abschnitte 30, 32, 34, 36 unterteilt, die sich jeweils über die gesamte Länge der in Fig. 1 a erkennbaren Außenkontur des Fräskopfes 12 erstrecken und die im Scheitelpunkt des Fräskopfes 12 an der Mittelachse 16 zusammenstoßen. Der Sektor 22 definiert dabei den Abschnitt 30, der Sektor 24 den Abschnitt 32, der Sektor 26 den Abschnitt 34 und der Sektor 28 den Abschnitt 36. Die Abschnitte 30, 34 sind gegenüber den Abschnitten 32, 36 mit einer unterschiedlichen Grundverzahnung versehen, die sich im dargestellten Fall durch den sogenannten Teiler, also der Anzahl an Zähnen pro Umfangslänge, unterscheidet. Wie speziell der Fig. 1c zu entnehmen ist, weisen die Zähne der unterschiedlichen Grundverzahnungen in den Abschnitten 30, 32, 34 und 36 jeweils den gleichen Brustwinkel α und den gleichen Rückenwinkel β auf, so dass sich zwischen den Abschnitten 30, 34 und den Abschnitten 32, 36 eine unterschiedliche Zahntiefe T₁ bzw. T₂ ergibt.

Durch die beiden unterschiedlichen Grundverzahnungen in den Abschnitten 30, 34 bzw. 32, 36 lassen sich bei dem erfindungsgemäßen Dentalfräser ein leichtes und schnelles Eindringen in ein zu bearbeitendes Material bei gleichzeitig feiner Oberfläche nach der Bearbeitung erreichen.

Der Dentalfräser 10 gemäß Fig. 1a ist in der Seitenansicht der Fig. 1d erneut dargestellt. Der Umfang des Dentalfräsers 10 ist in insgesamt vier Abschnitte unterteilt, wobei in der Darstellung der Fig. 1d der Abschnitt 34 zu erkennen ist, der vier Zähne trägt und jeweils teilweise zwei weitere Abschnitte 32, 36, die jeweils fünf Zähne tragen. Zur besseren Unterscheidung sind die Zähne im Abschnitt 34 schraffiert dargestellt. Gut zu erkennen ist, dass sich die Abschnitte einschließlich der darin verlaufenden Grundverzahnungen bis zu einem Scheitelpunkt des Dentalfräsers 10 auf der Mittellängsachse 16 erstrecken. Die Zähne der Grundverzahnungen in den Abschnitten 32, 34, 36 verlaufen dabei leicht geneigt zur Mittellängsachse 16, da sie einen leichten Drall zur Mittellängsachse 16 aufweisen. Anhand des Abschnitts 32 ist zu erkennen, dass dessen einzelne Zähne 25 über die gesamte Länge der Kontur des Fräskopfes bis zum Scheitelpunkt auf der Mittellängsachse 16 durchlaufen.

Weiter ist in der Darstellung der Fig. 1d die Anordnung der Spanbrechernuten 18, 20 gut zu erkennen. Wie bereits anhand der Fig. 1 a erläutert wurde, unterteilen die beiden schraubenförmigen Bahnen mit Spanbrechernuten 18, 20 die Grundverzahnungen des Fräskopfes des Dentalfräsers 10 in kurze Schneidenabschnitte mit der Länge L1 und lange Schneidenabschnitte mit der Länge L2. Im Bereich des abgerundeten Endes des Dentalfräsers 10 sind keine Spanbrechernuten mehr vorgesehen, hier könnten ebenfalls Spanbrechernuten vorgesehen sein.

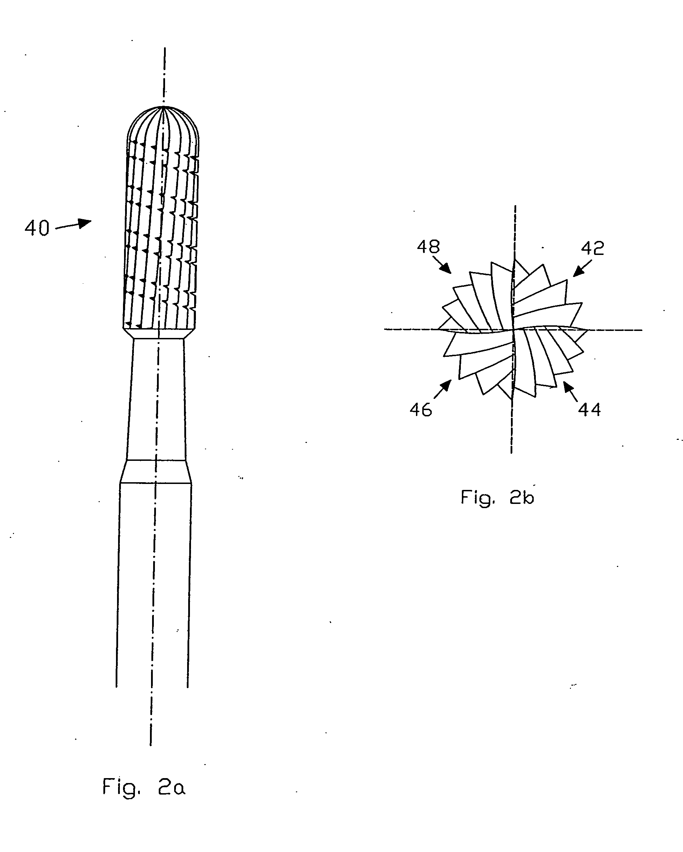

Die Darstellung der Fig. 2a zeigt eine Seitenansicht eines weiteren Dentalfräsers 40 gemäß der Erfindung und die Fig. 2b eine Draufsicht auf das freie, dem Schaft gegenüberliegende Ende des Dentalfräsers 40. Wie Fig. 2a zu entnehmen ist, ist der Fräskopf des Dentalfräsers 40 mit zwei parallel zueinander umlaufenden Spanbrecherbahnen versehen, die grundsätzlich gleich wie bei dem Dentalfräser 10 der Fig. 1a ausgebildet sind und daher nicht erneut erläutert werden.

Wie aber der Ansicht der Fig. 2b zu entnehmen ist, sind die beiden unterschiedlichen Grundverzahnungen der Verzahnung des Fräskopfes als sogenannte Gruppenverzahnungen ausgebildet und die Grundverzahnungen der einzelnen Abschnitte laufen am Ende des Fräskopfes des Dentalfräsers 40 nicht in einem einzigen Punkt zusammen, sondern stoßen an den Begrenzungslinien der einzelnen Abschnitte aneinander. Speziell weisen Abschnitte 42 und 44 Grundverzahnungen mit jeweils vier Zähnen auf und Abschnitte 44, 48 weisen jeweils Verzahnungen mit fünf Zähnen auf. Wie bereits ausgeführt wurde, laufen die Zähne der einzelnen Grundverzahnungen dabei nicht in einem gemeinsamen Mittelpunkt zusammen, sondern stoßen im abgerundeten Bereich des Endes des Fräskopfes des Dentalfräsers 40 an den Begrenzungen der Abschnitte 42, 44, 46, 48 aneinander.

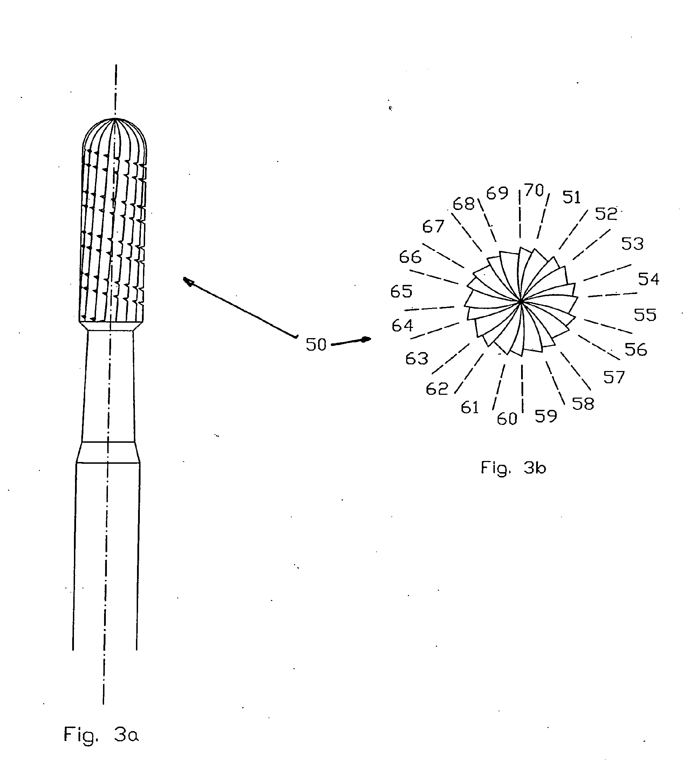

Die Darstellungen der Fig. 3a und 3b zeigen eine weitere Ausführungsform eines erfindungsgemäßen Dentalfräsers 50. Wie der Draufsicht der Fig. 3b zu entnehmen ist, ist der Umfang dieses Dentalfräsers 50 in insgesamt zwanzig Abschnitte 51 bis 70 unterteilt, wobei die ungeradzahligen Abschnitte 51, 53, ..., 69 sich über einen größeren Umfangsbereich erstrecken als die geradzahligen Abschnitte 52, 54, ..., 70. Aufeinanderfolgende Abschnitte tragen dabei unterschiedliche Grundverzahnungen, wobei jeder Abschnitt 51, ..., 70 jeweils nur einen einzigen Zahn trägt. Die ungeradzahligen Abschnitte 51, 53, ..., 69 sind mit jeweils einem breiten Zahn versehen, wohingegen die geradzahligen Abschnitte 52, 54, ..., 70 mit jeweils einem schmalen Zahn versehen sind. Die Zähne in den einzelnen Abschnitten 51, ..., 70 laufen dabei mit einem leichten Drall über die gesamte Oberfläche des Fräskopfes des Dentalfräsers 50, wie vor allem der Darstellung der Fig. 3a zu entnehmen ist, und sie erstrecken sich auch über das abgerundete, freie Ende des Fräskopfes. Alle Zähne der einzelnen Grundverzahnungen laufen dann im Scheitelpunkt des Fräskopfes zusammen. Die einzelnen Abschnitte 51, ..., 70 erstrecken sich demzufolge ebenfalls über die vollständige Länge der Kontur des Fräskopfes des Dentalfräsers 50 und weisen etwa die Form von Schraubenbahnen auf, die sich allerdings lediglich über einen Teilbereich des Umfangs bis zur Spitze des Dentalfräsers 50 hin winden.

Der Fig. 3a ist weiter zu entnehmen, dass der Dentalfräser 50 ebenfalls mit Spanbrechernuten versehen ist. Die Spanbrechernuten sind dabei über den gesamten Umfang des Fräskopfes mit dem gleichen Werkzeug ausgeführt und lediglich dadurch, dass ein und dasselbe Werkzeug unterschiedlich ausgeformte Zähne in den einzelnen Abschnitten 51, ..., 70 anschneidet, entstehen unterschiedliche Formen der Spanbrechernuten. Wie Fig. 3a weiter zu entnehmen ist, sind die Spanbrechernuten im Verlauf einer sich schraubenförmig um den Fräskopf herumwindenden Bahn eingebracht, wobei sich die Steigung dieser Bahn zum freien Ende des Fräskopfes hin verringert.

Die in Fig. 3a und 3b gezeigte Anordnung ist lediglich beispielhaft. Anstelle in jedem der Abschnitte 51, .... , 70 nur jeweils einen Zahn vorzusehen, können vorteilhafterweise die jeweils aufeinander folgenden Abschnitte 51, ... , 70 mit unterschiedlicher Grundverzahnung eine unterschiedliche Anzahl von Zähnen oder auch mehr als einen Zahn enthalten, so dass anstelle der dargestellte Abfolge 1 : 1 auch eine Abfolge 1 : 2, 2 : 2 oder dergleichen realisiert werden kann. Unabhängig von der Anzahl der Zähne in jedem der Abschnitte bleibt aber die schraubenbahnartige Form der Abschnitte und die sich schraubenförmig herumwindende Spanbrechernutenbahn mit sich zum Kopf hin verringenden Steigung unverändert.

## Patentansprüche

1. Dentalfräser mit einem Fräskopf (12) und einem Schaft (14), wobei der Fräskopf (12) mit einer Verzahnung versehen ist, die sich über eine gesamte Länge einer Kontur des Fräskopfes (12) erstreckt, wobei in Richtung einer Mittellängsachse (16) des Dentalfräsers (10; 40) gesehen der Umfang des Fräskopfes (12) in mehrere Abschnitte (30, 32, 34, 36; 42, 44, 46, 48) unterteilt ist, wobei sich in Umfangsrichtung des Fräskopfes (12) Abschnitte (30, 32, 34, 36; 42, 44, 46, 48) mit unterschiedlichen Grundverzahnungen abwechseln, **dadurch gekennzeichnet, dass** jeder Abschnitt (30, 32, 34, 36; 42, 44, 46, 48) mehr als einen Zahn der gleichen Grundverzahnung enthält.

2. Dentalfräser nach Anspruch 1, **dadurch gekennzeichnet, dass** Abschnitte (30, 32, 34, 36; 42, 44, 46, 48) mit unterschiedlicher Grundverzahnung eine unterschiedliche Anzahl von Zähnen enthalten.

3. Dentalfräser nach Anspruch 1 oder 2, **dadurch gekennzeichnet, dass** sich die Abschnitte (30, 32, 34, 36; 42, 44, 46, 48) jeweils über die gesamte Länge des Fräskopfes erstrecken und mit unterschiedlichen, sich jeweils über die gesamte Länge der Kontur des Fräskopfes erstreckenden Grundverzahnungen versehen sind.

4. Dentalfräser nach einem der vorstehenden Ansprüche, **dadurch gekennzeichnet, dass** sich die Grundverzahnungen im Teiler, entsprechend einer Anzahl von Zahnflanken pro Umfangslänge, in einer Zahntiefe (T₁, T₂), in der Zahnform, in einem Brustwinkel (α) der Zähne, in einem Rückenwinkel (β) der Zähne und/oder hinsichtlich eines Hinterschliffs der Zähne unterscheiden.

5. Dentalfräser nach einem der vorstehenden Ansprüche, **dadurch gekennzeichnet, dass** die Zähne der unterschiedlichen Grundverzahnungen in den Abschnitten (30, 32, 34, 36) jeweils den gleichen Brustwinkel (α) und den gleichen Rückenwinkel (β) aufweisen, sodass sich die Grundverzahnungen im Teiler, also der Anzahl an Zähnen pro Umfangslänge, unterscheiden.

6. Dentalfräser nach wenigstens einem der Ansprüche 1 bis 5, **dadurch gekennzeichnet, dass** die wenigstens zwei unterschiedlichen Grundverzahnungen in bezug auf ein Mittellängsachse des Dentalfräsers mit einem Drall versehen sind.

7. Dentalfräser nach wenigstens einem der vorstehenden Ansprüche, **dadurch gekennzeichnet, dass** die Abschnitte wenigstens teilweise die gleiche Fläche aufweisen.

8. Dentalfräser nach wenigstens einem der vorstehenden Ansprüche, **dadurch gekennzeichnet, dass** wenigstens vier Abschnitte vorgesehen sind, die in Umfangsrichtung gesehen abwechselnd mit unterschiedlichen Grundverzahnungen versehen sind.

9. Dentalfräser nach wenigstens einem der vorstehenden Ansprüche, **dadurch gekennzeichnet, dass** die unterschiedlichen Grundverzahnungen im Bereich des dem Schaft gegenüberliegenden Endes an Trennlinien der Abschnitte (42, 44, 46, 48) aufeinanderstoßen.

10. Dentalfräser nach wenigstens einem der vorstehenden Ansprüche 1 bis 8, **dadurch gekennzeichnet, dass** die unterschiedlichen Grundverzahnungen an dem dem Schaft gegenüberliegenden Ende in einem, auf der Mittellängsachse (16) des Dentalfräsers (10) liegenden Scheitelpunkt zusammenlaufen.

## Claims

1. Dental milling cutter comprising a milling head (12) and a shaft (14), wherein the milling head (12) is provided with a toothing extending over the entire length of a contour of the milling head (12), wherein as seen in the direction of the median longitudinal axis (16) of the dental milling cutter (10; 40) the circumference of the milling head (12) is divided into a plurality of sections (30, 32, 34, 36; 42, 44, 46, 48), wherein in the circumferential direction of the milling head (12) sections (30, 32, 34, 36; 42, 44, 46, 48) of different primary toothings are alternating, **characterized in that** each section (30, 32, 34, 36; 42, 44, 46, 48) includes more than one tooth of the same primary toothing.

2. Dental milling cutter according to claim 1, **characterized in that** sections (30, 32, 34, 36; 42, 44, 46, 48) of different primary toothings include a different number of teeth.

3. Dental milling cutter according to claim 1 or 2, **characterized in that** the sections (30, 32, 34, 36; 42, 44, 46, 48) each extend over the entire length of the milling head and are provided with different primary toothings, each extending over the entire length of the contour of the milling head.

4. Dental milling cutter according to any one of the preceding claims, **characterized in that** the primary toothings differ in the divider, corresponding to the number of tooth flanks per circumferential length, in a tooth depth (T₁, T₂), in the tooth shape, in a side-plate angle (α) of the teeth, in a back angle (ß) of the teeth and/or in terms of a relief grinding of the teeth.

5. Dental milling cutter according to any one of the preceding claims, **characterized in that** the teeth of the different primary toothings in the sections (30, 32, 34, 36) each have the same side-plate angle (α) and the same back angle (ß) such that the primary toothings differ in the divider, that is, the number of teeth per circumferential length.

6. Dental milling cutter according to at least one of the claims 1 to 5, **characterized in that** the at least two different primary toothings are provided with a twist in relation to a median longitudinal axis of the dental milling cutter.

7. Dental milling cutter according to at least one of the preceding claims, **characterized in that** the sections at least partially have the same surface area.

8. Dental milling cutter according to at least one of the preceding claims, **characterized in that** at least four sections are provided and alternatingly include different primary toothings as seen in the circumferential direction.

9. Dental milling cutter according to at least one of the preceding claims, **characterized in that** the different primary toothings in the vicinity of the end opposite the shaft meet on division lines of the sections (42, 44, 46, 48).

10. Dental milling cutter according to at least one of the preceding claims 1 to 8, **characterized in that** the different primary toothings on the end opposite the shaft converge in an apex located on the median longitudinal axis (16) of the dental milling cutter (10).

## Revendications

1. Fraise dentaire avec une tête de fraise (12) et une tige (14), dans laquelle la tête de fraise (12) est dotée d'une denture qui s'étend sur une longueur totale d'un contour de la tête de fraise (12), dans laquelle, vu dans la direction d'un axe longitudinal central (16) de la fraise dentaire (10; 40), le pourtour de la tête de fraise (12) est divisé en plusieurs parties (30, 32, 34, 36; 42, 44, 46, 48), dans laquelle des parties (30, 32, 34, 36; 42, 44, 46, 48) avec des dentures de base différentes alternent dans la direction périphérique de la tête de fraise (12), **caractérisée en ce que** chaque partie (30, 32, 34, 36; 42, 44, 46, 48) contient plus d'une dent de la même denture de base.

2. Fraise dentaire selon la revendication 1, **caractérisée en ce que** des parties (30, 32, 34, 36; 42, 44, 46, 48) avec une denture de base différente contiennent un nombre de dents différent.

3. Fraise dentaire selon la revendication 1 ou 2, **caractérisée en ce que** les parties (30, 32, 34, 36; 42, 44, 46, 48) s'étendent respectivement sur la longueur totale de la tête de fraise et sont dotées de dentures de base différentes s'étendant respectivement sur toute la longueur du contour de la tête de fraise.

4. Fraise dentaire selon l'une quelconque des revendications précédentes, **caractérisée en ce que** les dentures de base se différencient par le diviseur, selon un nombre de flancs de dents par unité de longueur périphérique, par une profondeur de dent (T1, T2), par la forme des dents, par un angle de face (α) des dents, par un angle de dos (β) des dents, et/ou en ce qui concerne une dépouille des dents.

5. Fraise dentaire selon l'une quelconque des revendications précédentes, **caractérisée en ce que** les dents des différentes dentures de base dans les parties (30, 32, 34, 36) présentent respectivement le même angle de face (α) et le même angle de dos (β), de telle manière que les dentures de base se différencient par le diviseur, donc par le nombre de dents par unité de longueur périphérique.

6. Fraise dentaire selon au moins une des revendications 1 à 5, **caractérisée en ce que** lesdites au moins deux dentures de base différentes sont dotées d'une torsion par rapport à l'axe longitudinal central de la fraise dentaire.

7. Fraise dentaire selon au moins une des revendications précédentes, **caractérisée en ce que** les parties présentent au moins partiellement la même face.

8. Fraise dentaire selon au moins une des revendications précédentes, **caractérisée en ce qu'**il est prévu au moins quatre parties qui, vues en direction périphérique, sont dotées en alternance de dentures de base différentes.

9. Fraise dentaire selon au moins une des revendications précédentes, **caractérisée en ce que** les dentures de base différentes se font mutuellement face sur des lignes de séparation des parties (42, 44, 46, 48) dans la région de l'extrémité opposée à la tige.

10. Fraise dentaire selon au moins une des revendications précédentes 1 à 8, **caractérisée en ce que** les dentures de base différentes se rejoignent, à l'extrémité opposée à la tige, en un sommet situé sur l'axe longitudinal central (16) de la fraise dentaire (10).
